## Europäisches Patentamt
## European Patent Office
## Office européen des brevets

(19)

(11) Numéro de publication: **0 027 483**
**A1**

(12)

# DEMANDE DE BREVET EUROPEEN

(21) Numéro de dépôt: **79400753.4**

(22) Date de dépôt: **17.10.79**

(51) Int. Cl.³: **B 60 R 21/12**

(43) Date de publication de la demande:
**29.04.81  Bulletin  81/17**

(84) Etats Contractants Désignés:
**AT BE CH DE FR IT NL SE**

(71) Demandeur: **Laporte, Marc Gérard**
**23 Rue Pierre Besancon**
**par Villecresnes F-94490 Marolles en Brie(FR)**

(71) Demandeur: **Laporte, Emile**
**23 Rue Pierre Besancon**
**par Villecresnes F-94490 Marolles en Brie(FR)**

(72) Inventeur: **Laporte, Marc Gérard**
**23 Rue Pierre Besancon**
**par Villecresnes F-94490 Marolles en Brie(FR)**

(72) Inventeur: **Laporte, Emile**
**23 Rue Pierre Besancon**
**par Villecresnes F-94490 Marolles en Brie(FR)**

(54) **Paroi pour protéger les conducteurs de véhicules automobiles contre les agressions.**

(57)  Paroi translucide (1) servant à protéger les conducteurs de véhicules destinés au transport des passagers. La paroi comporte un passe-billet (4) ainsi qu'un hygiaphone (3). Des fixations (2,5) permettent un démontage et un remontage rapide ainsi que les réglages nécessaires à l'adaptation de l'ensemble à des véhicules différents.

./...

EP 0 027 483 A1

Croydon Printing Company Ltd.

# FIG-1

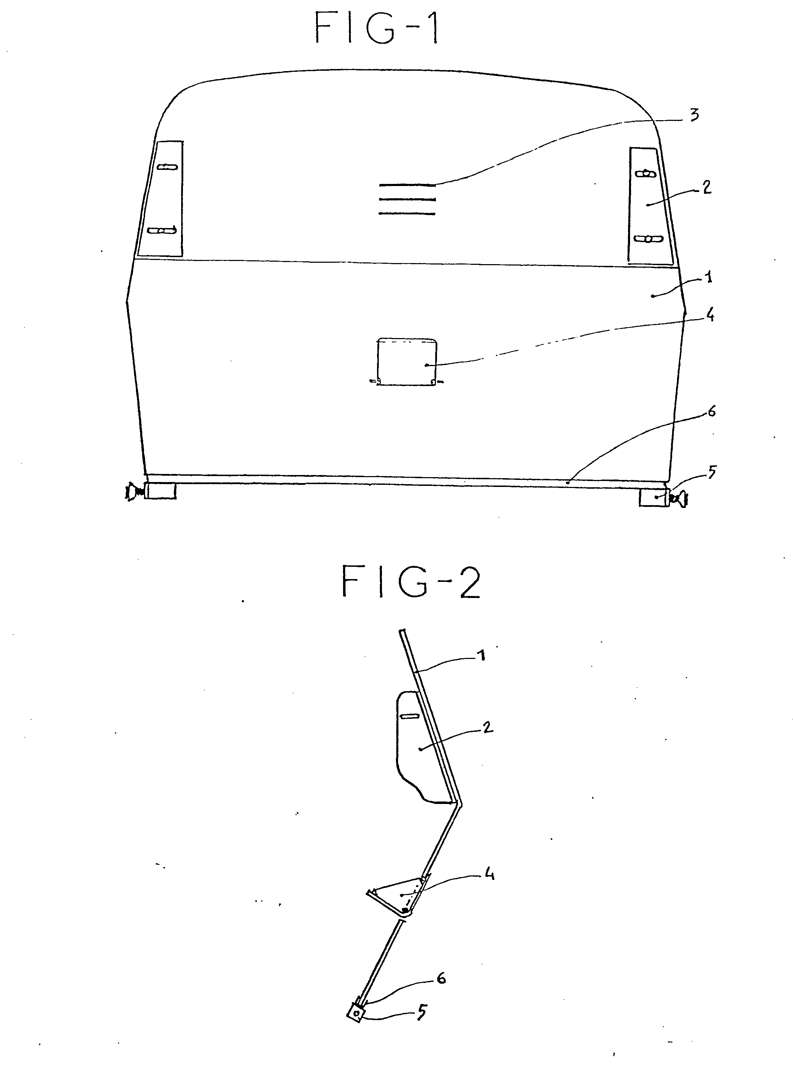

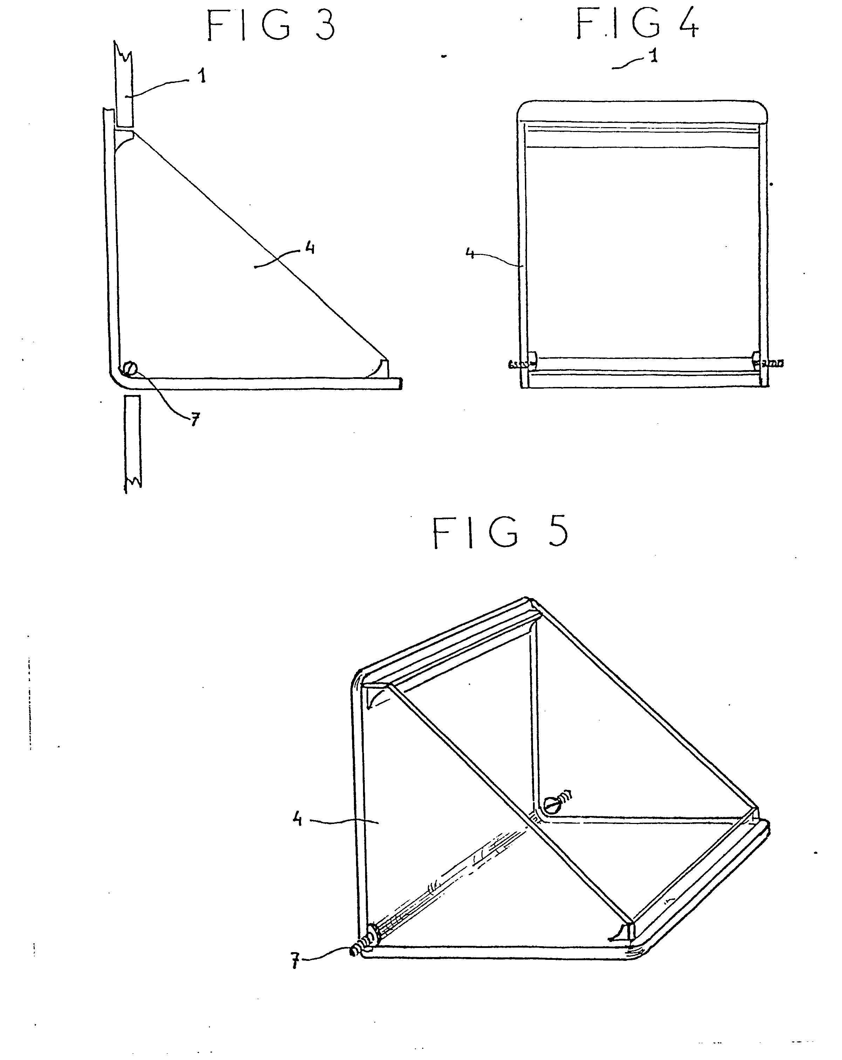

- Paroi amovible et démontable (plan n° 1 fig 1) de protection des conducteurs de véhicules pour public, munie d'un passe billets (plan n° 2 fig 3-4-5) et hygiaphone.

- La présente invention principalement destinée aux taxis, concerne l'isolement du conducteur d'avec les passagers.

- Notre paroi donne la sécurité au conducteur qui peut-être tout à sa conduite, isolé qu'il est des passagers.

- La paroi isolante objet de l'invention ne gêne en rien la visibilité vers l'arrière du véhicule du fait de sa fabrication dans une incolore, soit métracrylate ou verre trempé, ensemble en intégral en matière acrylate ou une base en métal. Son profil en partie haute est vertical alors que sa base est inclinée afin de suivre l'inclinaison des dossiers, par charnières ou fixe, des sièges avant laissant ainsi le plus de place pour les jambes des passagers. Le pourtour épouse au plus près le profil intérieur du véhicule ainsi équipé, ne permettant pas le passage d'une arme contondante et tranchante quelconque vers le conducteur, il n'est pas standard mais est fonction du véhicle à équiper.

Dans les deux parties hautes et basses il peut-être appliqué une feuille de métal en laissant transparente la partie comprise entre le haut des dossiers avant et la partie supérieure, soit en additif à la matière transparente, soit en remplacement suivant la protection à assurer.

Un passe billets (plan n° 2 fig 3-4-5) permet au client de régler son dû au chauffeur, il est prévu pour le passage aussi bien de billets que de pièces de monnaie, ce dernier peut rendre l'appoint sans cesser d'être en sécurité, le système à bascule pouvant être bloqué que du côté conduite en ne permettant à aucun moment des opérations le passage d'arme quelconque et d'un contact physique possible.

La fixation de l'ensemble permet son éventual démontage et remontage rapide.

- 2 -

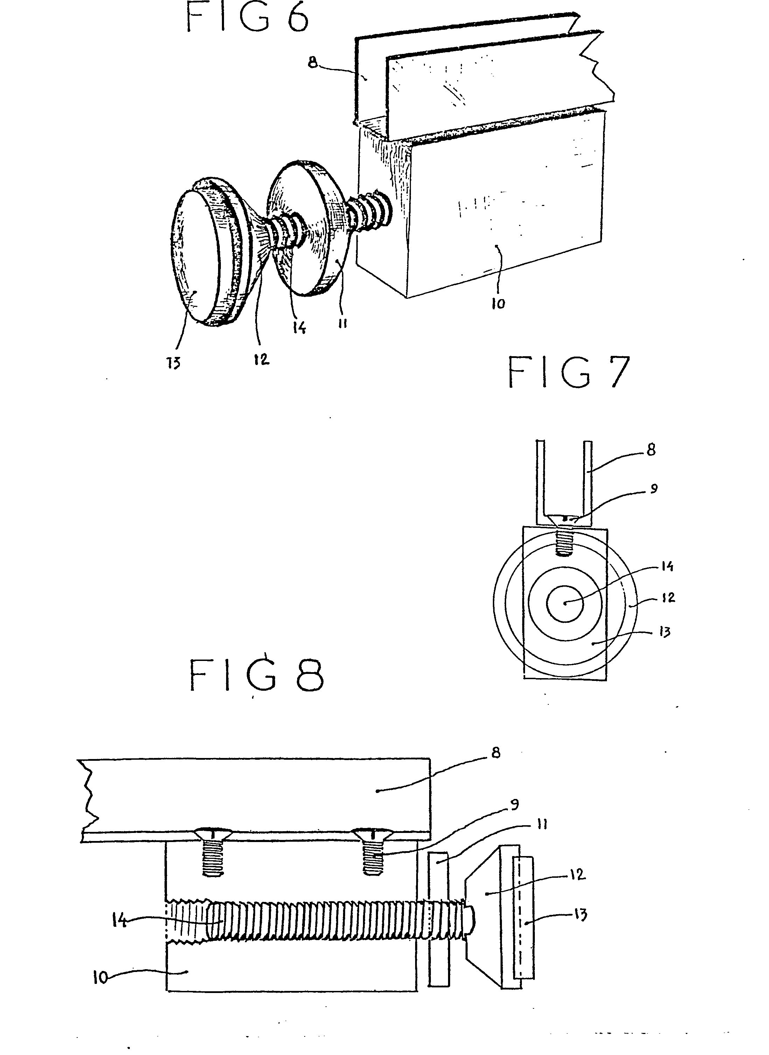

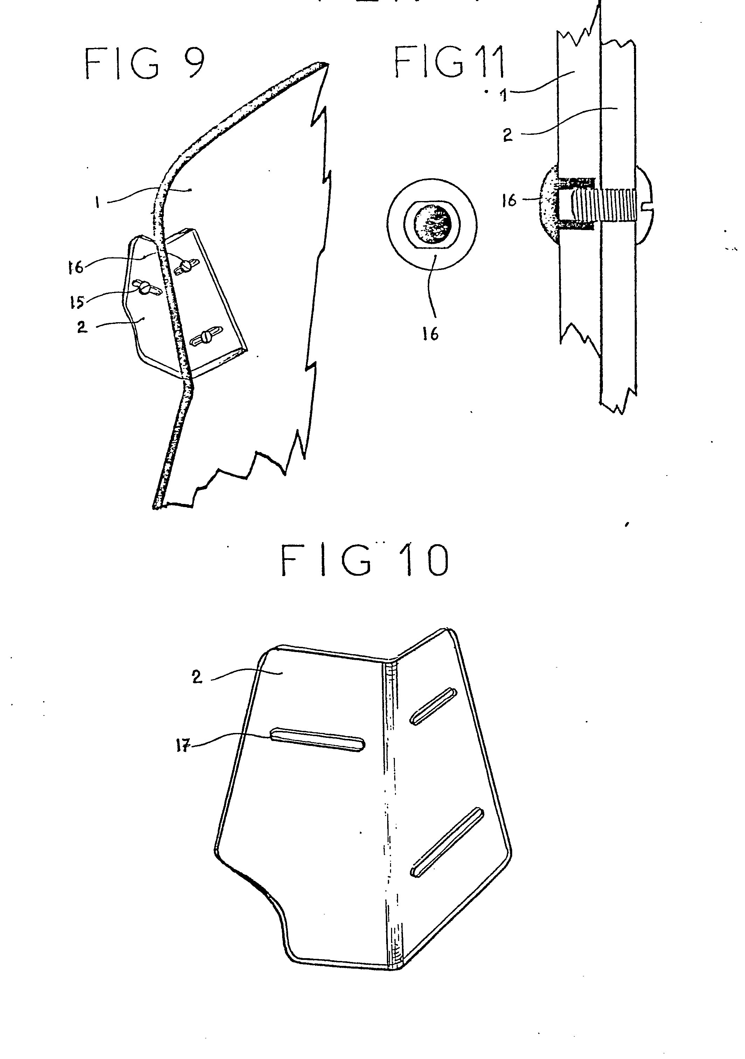

Les moyens employés sont à la base un système de vérin (plan n° 3 fig 6-7-8). et aux deux tiers de la hauteur de la paroi de chaque côté une équerre métallique ou métracrylate réglabe de fixation par vis sur les deux montants centraux des portières ou des ceintures de sécurité (plan n° 4 fig 9-10).

L'accès pour le démontage des vérins (plan n° 3 fig 6-7-8) n'est possible que du côté chauffeur, ainsi que les fixations des équerres hautes pouvant être fixées par tiges à éloignement variable sur les fixations des ceintures de sécurité ou montants permettant les réglages nécessaire étant donné que de nombreux véhicules de même série ne sont pas identiques dans leurs dimensions intérieures (plan n° 4 fig 9).

Fixation du bas par profil métal ou autre sur sa base avec deux ensemble vérin en ces extrémités avec vis de blocage, serrage par vis B.T.R. (plan n° 3 fig 6-7-8).

Fixation pour la partie haute par deux vérins de chaque côtés venant se visser à la paroi verticale par deux joues pliées forme à l'équerre -(plan n° 4 fig 9-10)

Ces systèmes permettent le réglage en hauteur et en largeur.

- Ce dispositif objet de l'invention est principalement destiné à équiper les taxes dont les chauffeurs sont exposés aux aggressions de leurs passagers.

Il peut-être utilisé partout ou une personne seule est exposée au danger d'une attaque par un tiers, à tout endroit où le besoin de visibilité est indispensable, avec une possibilité d'échange d'objets de petites dimensions, chaque profil et pourtour de la paroi étant fonction du dessin de l'ouverture à obstruer.

0027483

1 - Dispositif destiné à isoler, protéger et dissuader des agressions possibles les conducteurs de véhicules destinés au transport de passagers. Il comprend une paroi translucide en matière acrylique ou verre trempé ou polycarbonate d'une épaisseur suffisante et éprouvée pour dissuader éventuellement une agression.

2 - Son pourtour épousant les formes intérieures du véhicule ne permet pas le passage d'un objet permettant d'atteindre le conducteur. Un monnayeur (plan n° 4 fig 3-4-5) est incorporé à cette paroi pour permettre le passage de billets ou de pièces, ainsi qu'un hygiaphone (plan n° 1 fig 3). Il est conçu de telle façon, qu'il n'offre aucun moyen d'agression par son ouverture.

3 - Ce dispositif est surtout destiné aux voitures taxi, transports en commun, autobus, cars de tourisme, ambulances, voitures particulières ( séparation pour animaux).

# FIG-1

# FIG-2

PL Ⅱ-4       0027483

FIG 3

1

4

7

FIG 4

1

4

FIG 5

4

7

PL Ⅲ-4

0027483

FIG 6

FIG 7

FIG 8

PL IV-4

0027483

## FIG 9

## FIG 11

## FIG 10

Office européen
des brevets

**RAPPORT DE RECHERCHE EUROPEENNE**

Numéro de la demande

EP 79 400 753.4

| DOCUMENTS CONSIDERES COMME PERTINENTS | | | CLASSEMENT DE LA DEMANDE (Int. Cl.3) |
|---|---|---|---|
| Catégorie | Citation du document avec indication, en cas de besoin, des parties pertinentes | Revendication concernée | |
| X | FR - A - 2 144 304 (HEBERT) <br> * document entier * <br> -- | 1-3 | B 60 R 21/12 |
| X | FR - A - 1 145 272 (MOUGENOT) <br> * document entier * <br> -- | 1-3 | |
| | DE - U - 1 978 117 (KAROSSERIEWERKE WEINSBERG) <br> * document entier * <br> -- | 1-3 | **DOMAINES TECHNIQUES RECHERCHES (Int. Cl.3)** |
| | US - A - 3 547 217 (GARZA) <br> * colonne 6, lignes 42 à 56; fig. <br> 2, 3, 6, 12 à 14 * <br> ---- | 1-3 | B 60 R 21/12 |

CATEGORIE DES DOCUMENTS CITES

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

| X | Le présent rapport de recherche a été établi pour toutes les revendications |
|---|---|

| Lieu de la recherche | Date d'achèvement de la recherche | Examinateur |
|---|---|---|
| Berlin | 18-01-1980 | LEITZ |

**OEB Form 1503.1   06.78**